# EUROPEAN PATENT SPECIFICATION

(11) **EP 2 484 024 B1**
(45) Date of publication and mention of the grant of the patent: **20.03.2019**
(21) Application number: 10784338.5
(22) Date of filing: 28.09.2010
(51) Int. Cl.: H04B 7/04, H04B 7/06

(54) **METHOD OF PRECODING SYMBOLS FOR TRANSMISSION, METHOD OF SENDING A QUALITY VALUE ASSOCIATED WITH A PRECODING VECTOR AND CORRESPONDING DEVICES**
VERFAHREN ZUR PRÄKODIERUNG VON SYMBOLEN FÜR ÜBERTRAGUNGEN, VERFAHREN ZUR SENDUNG EINES MIT EINEM PRÄKODIERUNGSVEKTOR ASSOZIIERTEN QUALITÄTSWERTES SOWIE ENTSPRECHENDE VORRICHTUNGEN
PROCÉDÉ DE PRÉCODAGE DE SYMBOLES POUR TRANSMISSION, PROCÉDÉ D'ENVOI D'UNE VALEUR DE QUALITÉ ASSOCIÉE À UN VECTEUR DE PRÉCODAGE ET DISPOSITIFS CORRESPONDANTS

(30) Priority: 29.09.2009 WO PCT/CN2009/001109
(43) Date of publication of application: 08.08.2012
(73) Proprietor: Orange, 75015 Paris (FR)
(72) Inventor: LUO, Yajuan, Beijing 100080 (CN)
(74) Representative: Regimbeau
(86) International application number: PCT/IB2010/002635
(87) International publication number: WO 2011/039644

(56) References cited:
- WO-A2-2009/023532
- WO-A2-2009/023700
- US-A1- 2009 034 427

## Description

The invention relates to a method of precoding symbols for transmission, to a method of sending a quality value associated with a precoding vector and to corresponding devices.

In the field of wireless communications, it has been proposed to equip a transmitter (generally at a base station) with a plurality of antennas and to serve simultaneously a plurality of users each equipped with a corresponding receiver, such as in MU-MIMO communications (MU-MIMO standing for *"Multi-User Multiple Input Multiple Output"*).

Document WO2009/023700 discloses a method for MI-MIMO transmission. The method involves forming a set of unitary matrices based on a single user multi input-multi output (SUMIMO) codebook, where each unitary matrix has a subset of beams forming vectors included in the SU-MIMO codebook. The beam forming vectors are selected from each of the unitary matrices to form a multi-user (MU)-MIMO codebook. A set of wireless transmit/receive units (WTRUs) is selected to receive simultaneous transmission on same frequency and time resources. Data is precoded for each WTRU using orthogonal vectors, where the vectors are selected from columns of the unitary matrix.

Owing to the plurality of antennas, separation between users can be achieved not only by time or frequency multiplexing, but also by spatial separation, e.g. thanks to the use of a precoding scheme.

In such an approach, a number of transmission layers (including each the symbols to be sent to a particular user), typically less than or equal to the number of physical antennas, are precoded (*i.e.* linearly combined) by applying a beamforming matrix so as to obtain, for each antenna, the signals to be actually transmitted.

In order to determine in a practical manner which beamforming vector should be applied to symbols for transmission to a given user, and thus which beamforming matrix shall be applied to the transmission layers, use is conventionally made of a codebook of beamforming matrices, including e.g. 16 matrices according to the 3GPP technical specification 36.211 (V8.7.0) for precoding 4 layers on 4 antennas.

In order to determine which beamforming matrix to be used for transmission, each receiver tries each beamforming vector of each beamforming matrix and computes, for each beamforming vector, a throughput quality value (*e.g.* signal-to-interference plus noise ratio), assuming that other vectors of the concerned beamforming matrix are used for transmission to interfering receivers (*i.e.* to the remaining number of users served at the same time by the transmitter), as described for instance in *"*Comparison between MU-MIMO codebook-based channel reporting techniques for LTE downlink', 3GPP TSG RAN WG1 meeting #46 bis, Seoul, South Korea, October 2006.

Each receiver then sends back to the transmitter *(e.g.* to the base station) an index representing the beamforming vector for which the best throughput quality was achieved, and the corresponding computing throughput quality value.

Based on these items of information received from the various users, the transmitter selects the beamforming matrix and schedules the users for transmission on a given criterion, *e.g.* the highest sum-rate.

The need to compute, at each receiver, a quality value with respect to each and every vector of each and every matrix in the codebook results in a large amount of computation at the receiver. In addition, identifying this vector in the matrix and the matrix in the codebook as a feedback to the transmitter makes it necessary to send a non-negligible amount of information.

### SUMMARY OF THE INVENTION

The invention is defined by the appended independent claims. Dependent claims constitute embodiments of the invention. Any other subject-matter departing from the scope of protection of the claims shall be regarded as an example not in accordance with the invention.

In this context, the invention provides a method of precoding symbols for transmission to a first number of receivers on a second number of antennas of a transmitter using a predefined codebook comprising a plurality of beamforming matrices, each beamforming matrix having said first number of columns and said second number of rows, as defined in claim 1.

The first number is the maximum number of receivers that are possibly simultaneously served by the transmitter in the system concerned. A fewer number of receivers can be actually served depending on the scheduling scheme decided at the transmitter.

From the viewpoint of the receiver, the invention provides a method of sending a quality value associated with a precoding vector used for transmission of a first number of layers on a second number of antennas of a transmitter using a predefined codebook comprising a plurality of beamforming matrices, each beamforming matrix having said first number of columns and said second number of rows, as defined in claim 3.

In a corresponding manner, the invention provides a device for precoding symbols for transmission to a first number of receivers on a second number of antennas of the device using a predefined codebook comprising a plurality of beamforming matrices, each beamforming matrix having said first number of columns and said second number of rows, as defined in claim 5.

The invention also provides a device for sending a quality value associated with a precoding vector used for transmission of a first number of layers on a second number of antennas of a transmitter using a predefined codebook comprising a plurality of beamforming matrices, each beamforming matrix having said first number of columns and said second number of rows, as defined in claim 6.

### BRIEF DESCRIPTION OF THE FIGURES

Other features and advantages of the invention will appear in view of the following description, made with reference to the appended drawings where:
- Figure 1 schematically illustrates an exemplary context where the invention is implemented;
- Figure 2 shows a possible example for a transmitter embodying the invention;
- Figure 3 shows a possible example for a receiver embodying the invention;
- Figure 4 shows the main steps of a method of precoding according to a possible embodiment of the invention.

### DETAILED DESCRIPTION

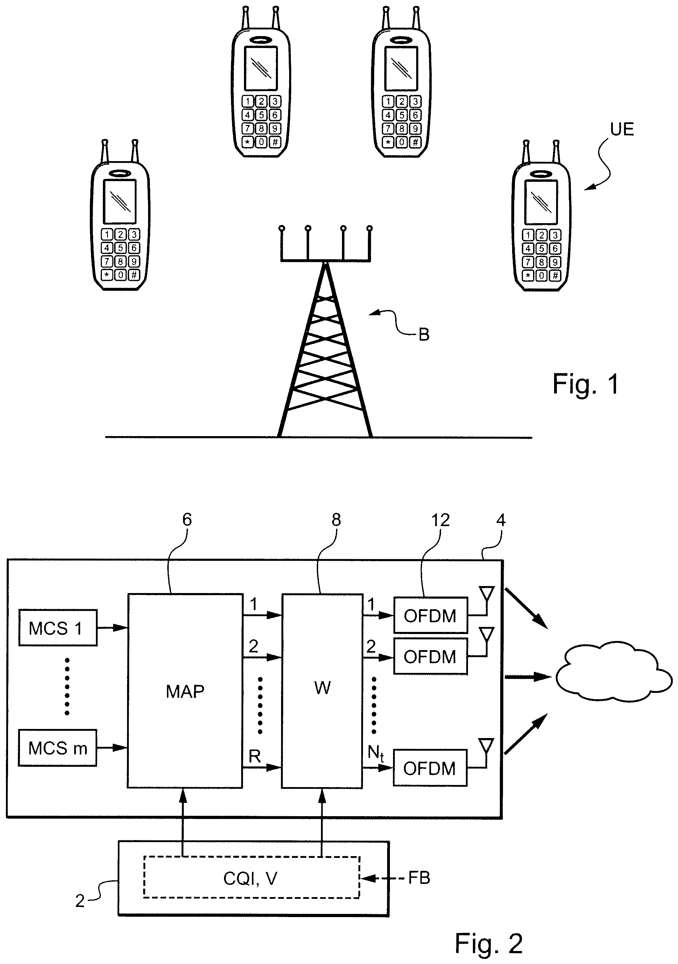

As shown in Figure 1, in the exemplary embodiment of the invention now described, a base station B includes a transmitter having 4 antennas and meant to transmit data represented by symbols to a plurality of users each having a corresponding receiver.

Although Figure 1 illustrates only 4 such users (that will possibly be served simultaneously as described later), a greater number of users can of course be present and possibly exchanging data with the base station B.

In the example shown in Figure 1, each user end UE is equipped with Nᵣ=2 antennas. Some or all users may of course be provided with a different number of antennas, *e.g.* 1 antenna or 4 antennas.

In the example being described, a plurality of streams of data should be transmitted from the transmitter to the various users, each stream of data being intended for a particular user.

Figure 2 illustrates an exemplary transmitter diagram of a precoded MU-MIMO system, which operates in an OFDM communication system. The transmitter includes a feedback processing part 2 and an encoding part 4.

The feedback processing part 2 is used to recover the Channel Quality Indicator (CQI) report received from the various users, which is used to determine the precoding matrix to apply, as further explained below. The feedback processing part thus constitutes an exemplary means for receiving throughput quality values.

For the encoding part 4, first, raw information bits are encoded and modulated; the modulated signals MCSᵢ are then mapped to several spatial layers (R layers on Figure 2) (sometimes called *"virtual antennas"*) by a layer mapping (MAP) module 6. The number of spatial layers depends on the feedback FB of the various users and is defined as the rank of the transmissions. Then the precoding (W) module or precoder 8 (forming an exemplary means for precoding symbols) converts the signal on the R virtual antennas to the Nₜ physical antennas by a linear precoding matrix of size Nₜ x R (where R ≤ Nₜ as previously noted). In the OFDM based communication system, the precoder output is assembled in the frequency domain and converted to time domain using an OFDM modulator 12 (*e.g.* using QPSK modulation) which can add a cyclic prefix to guard against channel distortions.

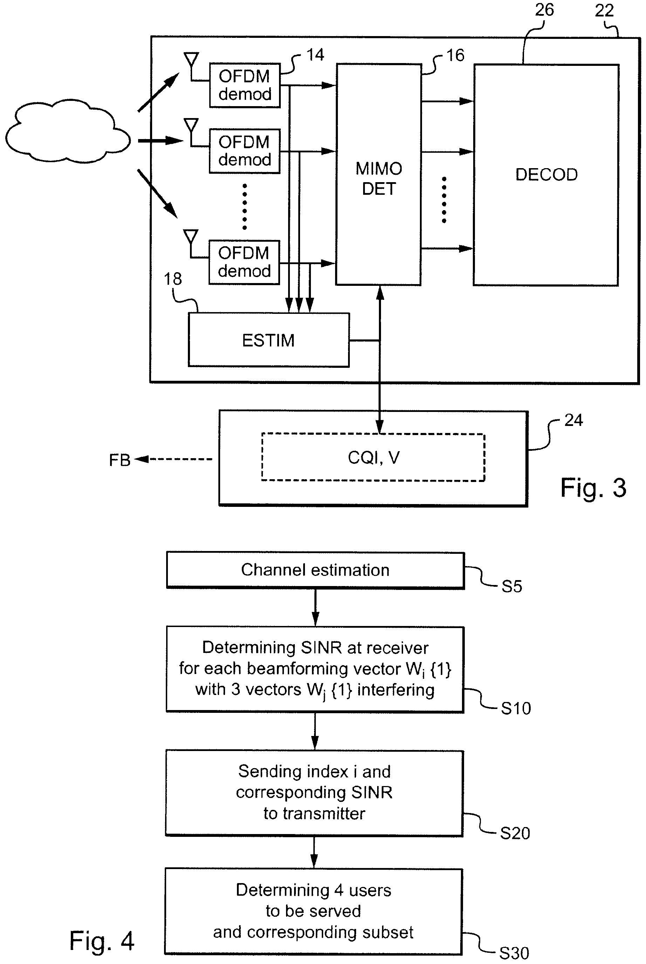

Figure 3 illustrates an exemplary receiver diagram likely to be used for each UE, which includes a data decoding part and a feedback generation part.

In the data decoding part 22, first, channel estimation ESTIM is performed by module 18 followed by the OFDM demodulation by modules 14, the demodulated symbol then being sent to channel decoding DECOD.

In the feedback generation part 24, the receiver estimates its channel and determines its preferred precoder index (by selecting a preferred codebook vector V) as well as the corresponding value SINR (*i.e.* CQI computed as explained later). These items of information will be used by the MIMO detector 16 to generate soft information for each transmission layer, which is then subsequently processed by DECOD module 26 to decode various coded streams.

The exemplary precoding scheme described here uses 16 possible beamforming vectors extracted from the codebook of 16 beamforming matrices Wᵢ defined in table 6.3.4.2.3-2 of the 3GPP technical specification 36.211 already referred to by taking a single column (*e.g.* the first column) from each matrix of the codebook.

Said differently, the set of beamforming vectors used in the present embodiment are the 16 vectors Wᵢ{1} of rank 1 defined in this table (i varying from 0 to 16).

These vectors are grouped in subsets as follows in the present example:
- {W₀{1}, W₁{1}, W₂{1}, W₃{1}};
- {W₄{1}, W₅{1}, W₆{1}, W₇{1}};
- {W₈{1}, W₉{1}, W₁₀{1}, W₁₁{1}};
- {W₁₂{1}, W₁₃{1}, W₁₄{1}, W₁₅{1}}.

Vectors within a subset are orthogonal to one another, as clear from the table below giving values of correlation between vectors Wᵢ{1} (i varying from 0 to 15).

| i | 0 | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|---|
| 0 | 1 | 0 | 0 | 0 | 0.65 | 0.27 | 0.27 | 0.65 | 0 | 0.71 | 0 | 0.71 | 0.5 | 0.5 | 0.5 | 0.5 |
| 1 | 0 | 1 | 0 | 0 | 0.65 | 0.65 | 0.27 | 0.27 | 0.71 | 0 | 0.71 | 0 | 0.5 | 0.5 | 0.5 | 0.5 |
| 2 | 0 | 0 | 1 | 0 | 0.27 | 0.65 | 0.65 | 0.27 | 0 | 0.71 | 0 | 0.71 | 0.5 | 0.5 | 0.5 | 0.5 |
| 3 | 0 | 0 | 0 | 1 | 0.27 | 0.27 | 0.65 | 0.65 | 0.71 | 0 | 0.71 | 0 | 0.5 | 0.5 | 0.5 | 0.5 |
| 4 | 0.65 | 0.65 | 0.27 | 0.27 | 1 | 0 | 0 | 0 | 0.65 | 0.65 | 0.27 | 0.27 | 0.65 | 0.27 | 0.27 | 0.65 |
| 5 | 0.27 | 0.65 | 0.65 | 0.27 | 0 | 1 | 0 | 0 | 0.27 | 0.65 | 0.65 | 0.27 | 0.27 | 0.65 | 0.65 | 0.27 |
| 6 | 0.27 | 0.27 | 0.65 | 0.65 | 0 | 0 | 1 | 0 | 0.27 | 0.27 | 0.65 | 0.65 | 0.27 | 0.65 | 0.65 | 0.27 |
| 7 | 0.65 | 0.27 | 0.27 | 0.65 | 0 | 0 | 0 | 1 | 0.65 | 0.27 | 0.27 | 0.65 | 0.65 | 0.27 | 0.27 | 0.65 |
| 8 | 0 | 0.71 | 0 | 0.71 | 0.65 | 0.27 | 0.27 | 0.65 | 1 | 0 | 0 | 0 | 0.5 | 0.5 | 0.5 | 0.5 |
| 9 | 0.71 | 0 | 0.71 | 0 | 0.65 | 0.65 | 0.27 | 0.27 | 0 | 1 | 0 | 0 | 0.5 | 0.5 | 0.5 | 0.5 |
| 10 | 0 | 0.71 | 0 | 0.71 | 0.27 | 0.65 | 0.65 | 0.27 | 0 | 0 | 1 | 0 | 0.5 | 0.5 | 0.5 | 0.5 |
| 11 | 0.71 | 0 | 0.71 | 0 | 0.27 | 0.27 | 0.65 | 0.65 | 0 | 0 | 0 | 1 | 0.5 | 0.5 | 0.5 | 0.5 |
| 12 | 0.5 | 0.5 | 0.5 | 0.5 | 0.65 | 0.27 | 0.27 | 0.65 | 0.5 | 0.5 | 0.5 | 0.5 | 1 | 0 | 0 | 0 |
| 13 | 0.5 | 0.5 | 0.5 | 0.5 | 0.27 | 0.65 | 0.65 | 0.27 | 0.5 | 0.5 | 0.5 | 0.5 | 0 | 1 | 0 | 0 |
| 14 | 0.5 | 0.5 | 0.5 | 0.5 | 0.27 | 0.65 | 0.65 | 0.27 | 0.5 | 0.5 | 0.5 | 0.5 | 0 | 0 | 1 | 0 |
| 15 | 0.5 | 0.5 | 0.5 | 0.5 | 0.65 | 0.27 | 0.27 | 0.65 | 0.5 | 0.5 | 0.5 | 0.5 | 0 | 0 | 0 | 1 |

The main steps of selection and use of precoding vectors in the present embodiment of the invention are now explained with reference to Figure 4.

After a channel estimation procedure (step S5) and prior to sending the symbols representing data meant to the various users, the transmitter sends out pilot signals successively using each of the vectors Wᵢ{1} of the set defined above as a precoding vector.

Each receiver can thus compute (step S10) a signal-to-interference plus noise ratio SINR in association with each vector of the set (and for vectors of this set only), considering as interference other vectors in the same subset as the vector concerned.

For instance, depending on the different signal levels received during transmission by the transmitter of pilot signals using successively vectors W₀{1}, W₁{1}, W₂{1}, W₃{1} as precoding vectors, the receiver determines:
- a signal-to-interference plus noise ratio value SINR when W₀{1} is used as a precoding vector for symbols intended to the concerned user, while other vectors of the subset are considered as interference (*i.e.* simulate the case where these other vectors of the subset are applied to symbols intended to three other users to be served simultaneously);
- a signal-to-interference plus noise ratio value SINR when W₁{1} is used as a precoding vector for symbols intended to the concerned user, while other vectors of the subset are considered as interference;
- a signal-to-interference plus noise ratio value SINR when W₂{1} is used as a precoding vector for symbols intended to the concerned user, while other vectors of the subset are considered as interference;
- a signal-to-interference plus noise ratio value SINR when W₃{1} is used as a precoding vector for symbols intended to the concerned user, while other vectors of the subset are considered as interference.

As vectors within a subset are orthogonal and simultaneous transmission uses vectors from the same subset as set forth below, the signal-to-noise ratio value SINR may be computed for instance based on the calculations described in the previously mentioned article *"Comparison between* MU-MIMO codebook-based channel reporting techniques for LTE downlink' as well as in "CQI calculation for MU-MIMO schemes", de B. Clercks et D. Mazzarese, IEEE C80216m-08-946.

Each receiver determines which precoding vector (among the set of precoding vectors Wᵢ{1}) used at the transmitter allows to maximize the throughput quality (the criterion here being signal-to-noise) and sends this information back to the transmitter (S20) by sending to the transmitter the index i corresponding to the vector Wᵢ{1} for which the signal-to-noise ratio is maximum, as well as the value of this maximum signal-to-noise ratio. In practice, the concerned vector V may be identified by the subset including this vector (*i.e.* by a number between 1 and 4) and by the identification of the vector in the subset (*i.e.* by another number between 1 and 4).

The information necessary to identify the preferred precoding vector thus necessitates only 4 bits.

Based on the channel quality value (practically the signal-to-interference plus noise ratio) received from the various receivers (*i.e.* in the present case the maximum quality value associated with each receiver and the corresponding precoding vector identification), the transmitter determines (S30) which users (*i.e.* receivers) will possibly be served simultaneously (*i.e.* which users have their respective preferred precoding vectors in the same subset but different from one another), using *e.g.* a maximum throughput criterion.

Once this determination is made, the transmitter sends data intended to the various users, simultaneously serving up to 4 users and then applying a matrix formed by up to 4 precoding vectors of the same subset to the layers formed respectively by the symbols to be transmitted to the users.

The example which has just been described is only a possible embodiment of the invention, which is not limited thereto.

## Claims

1. A method for precoding symbols for transmission to a first number of receivers on a second number of antennas of a transmitter using a predefined codebook comprising a plurality of beamforming matrices, each beamforming matrix having said first number of columns and said second number of rows, the method comprising the following steps:
- forming a set of beamforming vectors by taking a single predetermined column from each of said beamforming matrixes, a column of a beamforming matrix corresponding to a beamforming vector,
- regrouping said beamforming vectors in subsets such that a value of correlation between two beamforming vectors of a same subset is below a given threshold,
- transmitting, to each of the receivers, pilot signals using successively each of the beamforming vectors of a subset of beamforming vectors,
- receiving, from each of the receivers, an index corresponding to the beamforming vector of the subset of beamforming vectors used for transmitting pilots signals to the receiver maximizing a signal-to-interference plus noise ratio and a maximum value of the signal-to-interference plus noise ratio, the signal-to-interference plus noise ratio being determined for each precoding vector of the subset considering the other precoding vectors of the subset as interference,
- precoding symbols for transmission to said receivers by applying a matrix formed by a subset of said set of beamforming vectors selected based on the index corresponding to the beamforming vector of the formed set of beamforming vectors maximizing a signal-to-interference plus noise ratio and the maximum value of the signal-to-interference plus noise ratio received from each of the receivers.

2. A method according to claim 1, wherein beamforming vectors in said subset are orthogonal to one another.

3. A method of sending a quality value associated with a beamforming vector used for transmission of a first number of layers on a second number of antennas of a transmitter using a predefined codebook comprising a plurality of beamforming matrices, each beamforming matrix having said first number of columns and said second number of rows, the method comprising the following steps:
- receiving, from the transmitter, pilot signals successively using each of the beamforming vectors of a subset of a set of beamforming vectors, said set formed by taking a single predetermined column from each of said beamforming matrixes, a column of a beamforming matrix corresponding to a beamforming vector, and said subset formed by regrouping said beamforming vectors in subsets such that a value of correlation between two beamforming vectors of a same subset is below a given threshold,
- determining, for each of the beamforming vectors, a signal-to-interference plus noise ratio, the signal-to-interference plus noise ratio being determined for each precoding vector of the subset considering the other precoding vectors of the subset as interference,
- sending an index corresponding to the beamforming vector of the formed subset of beamforming vectors maximizing the signal-to-interference plus noise ratio and a maximum value of the signal-to-interference plus noise ratio to the transmitter.

4. A method according to claim 3, wherein said beamforming vectors in said subset are orthogonal to one another.

5. A device for precoding symbols for transmission to a first number of receivers on a second number of antennas of the device using a predefined codebook comprising a plurality of beamforming matrices, each beamforming matrix having said first number of columns and said second number of rows, the device comprising:
- means for forming a set of beamforming vectors by taking a single predetermined column from each of said beamforming matrixes, a column of a beamforming matrix corresponding to a beamforming vector
- means for regrouping said beamforming vectors in subsets such that a value of correlation between two beamforming vectors of a same subset is below a given threshold,
- means for transmitting, to each of the receivers, pilot signals successively using each of the beamforming vectors of a subset of beamforming vectors,
- means for receiving, from each of the receivers, an index corresponding to the beamforming vector of the subset of beamforming vectors used for transmitting pilot signals to the receiver maximizing a signal-to-interference plus noise ratio and a maximum value of the signal-to-interference plus noise ratio, , the signal-to-interference plus noise ratio being determined for each precoding vector of the subset considering the other precoding vectors of the subset as interference,
- means for precoding symbols for transmission to said receivers by applying a matrix formed by a subset of said set of beamforming vectors selected based on the index corresponding to the beamforming vector of the formed set of beamforming vectors maximizing a signal-to-interference plus noise ratio and the maximum value of the signal-to-interference plus noise ratio received from each of the receivers.

6. A device for sending a quality value associated with a beamforming vector used for transmission of a first number of layers on a second number of antennas of a transmitter using a predefined codebook comprising a plurality of beamforming matrices, each beamforming matrix having said first number of columns and said second number of rows, the device comprising:
- means for receiving, from the transmitter, pilot signals successively using each of the beamforming vectors of a subset of a set of beamforming vectors, said set formed by taking a single predetermined column from each of said beamforming matrixes, a column of a beamforming matrix corresponding to a beamforming vector, and said subset formed by regrouping said beamforming vectors in subsets such that a value of correlation between two beamforming vectors of a same subset is below a given threshold,
- means for determining, for each of the beamforming vectors, a signal-to-interference plus noise ratio, the signal-to-interference plus noise ratio being determined for each precoding vector of the subset considering the other precoding vectors of the subset as interference,
- means for sending an index corresponding to the beamforming vector of the formed subset of beamforming vectors maximizing the signal-to-interference plus noise ratio and a maximum value of the signal-to-interference plus noise ratio to the transmitter.

## Patentansprüche

1. Verfahren zur Präkodierung von Symbolen für Übertragungen an eine erste Anzahl von Empfängern auf einer zweiten Anzahl von Antennen eines Senders unter Benutzung eines vordefinierten Kodebuchs, das mehrere strahlformende Matrizen aufweist, wobei jede strahlformende Matrix die erste Anzahl von Spalten und die zweite Anzahl von Zeilen aufweist, das Verfahren die folgenden Schritte aufweisend:
- Ausbilden eines Satzes von strahlformenden Vektoren durch Annehmen einer einzelnen vorbestimmten Spalte von jeder der strahlformenden Matrizen, wobei eine Spalte einer strahlformenden Matrix einem strahlformenden Vektor entspricht,
- derartiges Umgruppieren der strahlformenden Vektoren in Teilsätze, dass ein Korrelationswert zwischen zwei strahlformenden Vektoren eines gleichen Teilsatzes unterhalb einer gegebenen Schwelle liegt,
- Übertragen, an jeden der Empfänger, von Pilotsignalen unter aufeinanderfolgender Verwendung von jedem der strahlformenden Vektoren eines Teilsatzes von strahlformenden Vektoren,
- Empfangen, von jedem der Empfänger, eines Index, der dem strahlformenden Vektor des Teilsatzes von strahlformenden Vektoren, welche zum Übertragen von Pilotsignalen an den Empfänger verwendet werden, entspricht, die ein Signal/Interferenz-plus-Rausch-Verhältnis und einen Maximalwert des Signal/Interferenz-plus-Rausch-Verhältnisses maximieren, wobei das Signal/Interferenz-plus-Rausch-Verhältnis für jeden Präkodierungsvektor des Teilsatzes unter Erachten der anderen Präkodierungsvektoren des Teilsatzes als Interferenz bestimmt wird,
- Präkodieren von Symbolen für Übertragungen an die Empfänger durch Anwenden einer Matrix, die durch einen Teilsatz des Satzes von strahlformenden Vektoren, der basierend auf dem Index ausgebildet ist, welcher dem strahlformenden Vektor des ausgebildeten Satzes von strahlformenden Vektoren entspricht, die ein Signal/Interferenz-plus-Rausch-Verhältnis und einen Maximalwert des Signal/Interferenz-plus-Rausch Verhältnisses, welche von jedem der Empfänger empfangen werden, maximieren.

2. Verfahren nach Anspruch 1, wobei strahlformende Vektoren im Teilsatz orthogonal zueinander sind.

3. Verfahren zur Sendung eines mit einem strahlformenden Vektor assoziierten Qualitätswertes, der zur Übertragung einer ersten Anzahl von Schichten auf einer zweiten Anzahl von Antennen eines Senders unter Benutzung eines vordefinierten Kodebuchs, das mehrere strahlformende Matrizen aufweist, wobei jede strahlformende Matrix die erste Anzahl von Spalten und die zweite Anzahl von Zeilen aufweist, verwendet wird, das Verfahren die folgenden Schritte aufweisend:
- aufeinanderfolgendes Übertragen, vom Sender, von Pilotsignalen unter Verwendung von jedem der strahlformenden Vektoren eines Teilsatzes eines Satzes von strahlformenden Vektoren, wobei der Satz durch Annehmen einer einzelnen vorbestimmten Spalte von jeder der strahlformenden Matrizen ausgebildet wird, wobei eine Spalte einer strahlformenden Matrix einem strahlformenden Vektor entspricht, und wobei der Teilsatz durch derartiges Umgruppieren der strahlformenden Vektoren in Teilsätze ausgebildet wird, dass ein Korrelationswert zwischen zwei strahlformenden Vektoren eines gleichen Teilsatzes unterhalb einer gegebenen Schwelle liegt,
- Bestimmen, für jeden der strahlformenden Vektoren, eines Signal/Interferenz-plus-Rausch-Verhältnisses, wobei das Signal/Interferenz-plus-Rausch-Verhältnis für jeden Präkodierungsvektor des Teilsatzes unter Erachten der anderen Präkodierungsvektoren des Teilsatzes als Interferenz bestimmt wird,
- Senden eines Index, der dem strahlformenden Vektor des ausgebildeten Teilsatzes von strahlformenden Vektoren entspricht, die das Signal/Interferenz-plus-Rausch-Verhältnis und einen Maximalwert des Signal/Interferenz-plus-Rausch-Verhältnisses maximieren, an den Sender.

4. Verfahren nach Anspruch 3, wobei die strahlformenden Vektoren im Teilsatz orthogonal zueinander sind.

5. Vorrichtung zur Präkodierung von Symbolen für Übertragungen an eine erste Anzahl von Empfängern auf einer zweiten Anzahl von Antennen der Vorrichtung unter Benutzung eines vordefinierten Kodebuchs, das mehrere strahlformende Matrizen aufweist, wobei jede strahlformende Matrix die erste Anzahl von Spalten und die zweite Anzahl von Zeilen aufweist, die Vorrichtung aufweisend:
- Mittel zum Ausbilden eines Satzes von strahlformenden Vektoren durch Annehmen einer einzelnen vorbestimmten Spalte von jeder der strahlformenden Matrizen, wobei eine Spalte einer strahlformenden Matrix einem strahlformenden Vektor entspricht,
- Mittel zum derartigen Umgruppieren der strahlformenden Vektoren in Teilsätze, dass ein Korrelationswert zwischen zwei strahlformenden Vektoren eines gleichen Teilsatzes unterhalb einer gegebenen Schwelle liegt,
- Mittel zum Übertragen, an jeden der Empfänger, von Pilotsignalen unter aufeinanderfolgender Verwendung von jedem der strahlformenden Vektoren eines Teilsatzes von strahlformenden Vektoren,
- Mittel zum Empfangen, von jedem der Empfänger, eines Index, der dem strahlformenden Vektor des Teilsatzes von strahlformenden Vektoren, welche zum Übertragen von Pilotsignalen an den Empfänger verwendet werden, entspricht, die ein Signal/Interferenz-plus-Rausch-Verhältnis und einen Maximalwert des Signal/Interferenz-plus-Rausch-Verhältnisses maximieren, wobei das Signal/Interferenz-plus-Rausch-Verhältnis für jeden Präkodierungsvektor des Teilsatzes unter Erachten der anderen Präkodierungsvektoren des Teilsatzes als Interferenz bestimmt wird,
- Mittel zum Präkodieren von Symbolen für Übertragungen an die Empfänger durch Anwenden einer Matrix, die durch einen Teilsatz des Satzes von strahlformenden Vektoren, der basierend auf dem Index ausgebildet ist, welcher dem strahlformenden Vektor des ausgebildeten Satzes von strahlformenden Vektoren entspricht, die ein Signal/Interferenz-plus-Rausch-Verhältnis und einen Maximalwert des Signal/Interferenz-plus-Rausch-Verhältnisses, welche von jedem der Empfänger empfangen werden, maximieren

6. Vorrichtung zur Sendung eines mit einem strahlformenden Vektor assoziierten Qualitätswertes, der zur Übertragung einer ersten Anzahl von Schichten auf einer zweiten Anzahl von Antennen eines Senders unter Benutzung eines vordefinierten Kodebuchs, das mehrere strahlformende Matrizen aufweist, wobei jede strahlformende Matrix die erste Anzahl von Spalten und die zweite Anzahl von Zeilen aufweist, verwendet wird, die Vorrichtung aufweisend:
- Mittel zum aufeinanderfolgendes Empfangen, vom Sender, von Pilotsignalen unter Verwendung von jedem der strahlformenden Vektoren eines Teilsatzes eines Satzes von strahlformenden Vektoren, wobei der Satz durch Annehmen einer einzelnen vorbestimmten Spalte von jeder der strahlformenden Matrizen ausgebildet wird, wobei eine Spalte einer strahlformenden Matrix einem strahlformenden Vektor entspricht, und wobei der Teilsatz durch derartiges Umgruppieren der strahlformenden Vektoren in Teilsätze ausgebildet wird, dass ein Korrelationswert zwischen zwei strahlformenden Vektoren eines gleichen Teilsatzes unterhalb einer gegebenen Schwelle liegt,
- Mittel zum Bestimmen, für jeden der strahlformenden Vektoren, eines Signal/Interferenzplus-Rausch-Verhältnisses, wobei das Signal/Interferenz-plus-Rausch-Verhältnis für jeden Präkodierungsvektor des Teilsatzes unter Erachten der anderen Präkodierungsvektoren des Teilsatzes als Interferenz bestimmt wird,
- Mittel zum Senden eines Index, der dem strahlformenden Vektor des ausgebildeten Teilsatzes von strahlformenden Vektoren entspricht, die das Signal/Interferenz-plus-Rausch-Verhältnis und einen Maximalwert des Signal/Interferenz-plus-Rausch-Verhältnisses maximieren, an den Sender.

## Revendications

1. Procédé pour précoder des symboles à transmettre à un premier nombre de récepteurs sur un deuxième nombre d'antennes d'un émetteur en utilisant un livre de codes prédéfini comprenant une pluralité de matrices de formation de faisceau, chaque matrice de formation de faisceau ayant ledit premier nombre de colonnes et ledit deuxième nombre de rangées, le procédé comprenant les étapes suivantes :
- former un ensemble de vecteurs de formation de faisceau en prenant une seule colonne prédéterminée de chacune desdites matrices de formation de faisceau, une colonne d'une matrice de formation de faisceau correspondant à un vecteur de formation de faisceau,
- regrouper lesdits vecteurs de formation de faisceau en sous-ensembles de telle sorte qu'une valeur de corrélation entre deux vecteurs de formation de faisceau d'un même sous-ensemble soit inférieure à un seuil donné,
- émettre, vers chacun des récepteurs, des signaux pilotes en utilisant successivement chacun des vecteurs de formation de faisceau d'un sous-ensemble de vecteurs de formation de faisceau,
- recevoir, depuis chacun des récepteurs, un indice correspondant au vecteur de formation de faisceau du sous-ensemble de vecteurs de formation de faisceau utilisés pour émettre des signaux pilotes vers le récepteur maximisant un rapport signal sur interférence plus bruit et une valeur maximale du rapport signal sur interférence plus bruit, le rapport signal sur interférence plus bruit étant déterminé pour chaque vecteur de précodage du sous-ensemble en considérant les autres vecteurs de précodage du sous-ensemble comme une interférence,
- précoder des symboles à transmettre auxdits récepteurs en appliquant une matrice formée par un sous-ensemble dudit ensemble de vecteurs de formation de faisceau choisi sur la base de l'indice correspondant au vecteur de formation de faisceau de l'ensemble formé de vecteurs de formation de faisceau maximisant un rapport signal sur interférence plus bruit et la valeur maximale du rapport signal sur interférence plus bruit reçu depuis chacun des récepteurs.

2. Procédé selon la revendication 1, dans lequel les vecteurs de formation de faisceau dans ledit sous-ensemble sont orthogonaux les uns aux autres.

3. Procédé d'envoi d'une valeur de qualité associée à un vecteur de formation de faisceau utilisé pour la transmission d'un premier nombre de couches sur un deuxième nombre d'antennes d'un émetteur en utilisant un livre de codes prédéfini comprenant une pluralité de matrices de formation de faisceau, chaque matrice de formation de faisceau ayant ledit premier nombre de colonnes et ledit deuxième nombre de rangées, le procédé comprenant les étapes suivantes :
- recevoir, depuis l'émetteur, des signaux pilotes utilisant successivement chacun des vecteurs de formation de faisceau d'un sous-ensemble d'un ensemble de vecteurs de formation de faisceau, ledit ensemble étant formé en prenant une seule colonne prédéterminée de chacune desdites matrices de formation de faisceau, une colonne d'une matrice de formation de faisceau correspondant à un vecteur de formation de faisceau, et ledit sous-ensemble étant formé en regroupant lesdits vecteurs de formation de faisceau en sous-ensembles de telle sorte qu'une valeur de corrélation entre deux vecteurs de formation de faisceau d'un même sous-ensemble soit inférieure à un seuil donné,
- déterminer, pour chacun des vecteurs de formation de faisceau, un rapport signal sur interférence plus bruit, le rapport signal sur interférence plus bruit étant déterminé pour chaque vecteur de précodage du sous-ensemble en considérant les autres vecteurs de précodage du sous-ensemble comme une interférence,
- envoyer un indice correspondant au vecteur de formation de faisceau du sous-ensemble formé de vecteurs de formation de faisceau maximisant le rapport signal sur interférence plus bruit et une valeur maximale du rapport signal sur interférence plus bruit à l'émetteur.

4. Procédé selon la revendication 3, dans lequel lesdits vecteurs de formation de faisceau dans ledit sous-ensemble sont orthogonaux les uns aux autres.

5. Dispositif pour le précodage de symboles à transmettre à un premier nombre de récepteurs sur un deuxième nombre d'antennes du dispositif en utilisant un livre de codes prédéfini comprenant une pluralité de matrices de formation de faisceau, chaque matrice de formation de faisceau ayant ledit premier nombre de colonnes et ledit deuxième nombre de rangées, le dispositif comprenant :
- des moyens pour former un ensemble de vecteurs de formation de faisceau en prenant une seule colonne prédéterminée de chacune desdites matrices de formation de faisceau, une colonne d'une matrice de formation de faisceau correspondant à un vecteur de formation de faisceau,
- des moyens pour regrouper lesdits vecteurs de formation de faisceau en sous-ensembles de telle sorte qu'une valeur de corrélation entre deux vecteurs de formation de faisceau d'un même sous-ensemble soit inférieure à un seuil donné,
- des moyens pour émettre, vers chacun des récepteurs, des signaux pilotes en utilisant successivement chacun des vecteurs de formation de faisceau d'un sous-ensemble de vecteurs de formation de faisceau,
- des moyens pour recevoir, depuis chacun des récepteurs, un indice correspondant au vecteur de formation de faisceau du sous-ensemble de vecteurs de formation de faisceau utilisés pour émettre des signaux pilotes vers le récepteur maximisant un rapport signal sur interférence plus bruit et une valeur maximale du rapport signal sur interférence plus bruit, le rapport signal sur interférence plus bruit étant déterminé pour chaque vecteur de précodage du sous-ensemble en considérant les autres vecteurs de précodage du sous-ensemble comme une interférence,
- des moyens pour précoder des symboles pour transmission auxdits récepteurs en appliquant une matrice formée par un sous-ensemble dudit ensemble de vecteurs de formation de faisceau choisi sur la base de l'indice correspondant au vecteur de formation de faisceau de l'ensemble formé de vecteurs de formation de faisceau maximisant un rapport signal sur interférence plus bruit et la valeur maximale du rapport signal sur interférence plus bruit reçu depuis chacun des récepteurs.

6. Dispositif pour envoyer une valeur de qualité associée à un vecteur de formation de faisceau utilisé pour la transmission d'un premier nombre de couches sur un deuxième nombre d'antennes d'un émetteur en utilisant un livre de codes prédéfini comprenant une pluralité de matrices de formation de faisceau, chaque matrice de formation de faisceau ayant ledit premier nombre de colonnes et ledit deuxième nombre de rangées, le dispositif comprenant :
- des moyens pour recevoir, depuis l'émetteur, des signaux pilotes utilisant successivement chacun des vecteurs de formation de faisceau d'un sous-ensemble d'un ensemble de vecteurs de formation de faisceau, ledit ensemble étant formé en prenant une seule colonne prédéterminée de chacune desdites matrices de formation de faisceau, une colonne d'une matrice de formation de faisceau correspondant à un vecteur de formation de faisceau, et ledit sous-ensemble étant formé en regroupant lesdits vecteurs de formation de faisceau en sous-ensembles de telle sorte qu'une valeur de corrélation entre deux vecteurs de formation de faisceau d'un même sous-ensemble soit inférieure à un seuil donné,
- des moyens pour déterminer, pour chacun des vecteurs de formation de faisceau, un rapport signal sur interférence plus bruit, le rapport signal sur interférence plus bruit étant déterminé pour chaque vecteur de précodage du sous-ensemble en considérant les autres vecteurs de précodage du sous-ensemble comme une interférence,
- des moyens pour envoyer un indice correspondant au vecteur de formation de faisceau du sous-ensemble formé de vecteurs de formation de faisceau maximisant le rapport signal sur interférence plus bruit et une valeur maximale du rapport signal sur interférence plus bruit à l'émetteur.
